# EUROPEAN PATENT APPLICATION

(11) **EP 2 343 874 A1**
(43) Date of publication of application: **13.07.2011**
(21) Application number: 09821927.2
(22) Date of filing: 07.10.2009
(51) Int. Cl.: H04M 3/00, H04L 12/56, H04M 11/00, H04W 80/10

(54) **COMMUNICATION SYSTEM AND COMMUNICATION DEVICE**

(30) Priority: 21.10.2008 JP 2008270916
(71) Applicant: Mitsubishi Electric Corporation, Tokyo 100-8310 (JP); NTT DOCOMO, INC., Chiyoda-ku Tokyo 100-6150 (JP)
(72) Inventor: SHIMIZU, Keiichi, Tokyo 100-8310 (JP); INOUE, Masahiro, Tokyo 100-6150 (JP)
(74) Representative: Pfenning, Meinig & Partner GbR
(86) International application number: PCT/JP2009/067497
(87) International publication number: WO 2010/047229

(57) **Abstract**

The present invention provides a communication system including a SIP client 1-2, a proxy 2-2, and a node 3-2. When the node 3-2 relays a SIP message sent for the SIP client 1-2, the node 3-2 replaces management information set up in a parameter with an ID, and stores the ID and the management information by associating them with each other. When the node 3-2 relays a SIP message in which the stored ID is set up, the node 3-2 replaces the ID with the management information associated with the ID. When an ID is set up in a parameter of a received SIP message, the SIP client 1-2 stores the parameter and the ID by associating them with each other. When the client 1-2 sends a SIP message that includes the stored parameter, an ID associated with the parameter is set up in the parameter.

## Description

### Field

The present invention relates to a communication system having a function of compressing/decompressing SIP messages used for SIP (Session Initiation Protocol) signaling, and to a communication device.

### Background

SIP is a protocol for establishing sessions of multimedia such as sound and images, and is prescribed by the IETF (The Internet Engineering Task Force) RFC2543. Because messages used in the SIP are prescribed by texts like HTTP, these messages generally become large. When these messages are used in a communication environment with a narrowband, the time required for call setup is increased and the band is wasted. Therefore, the IETF prescribes a SIP signaling compression technique, that is, SigComp (Signaling Compression) by RFC3320. Although this SigComp does not prescribe a compression decompression algorithm, a compression algorithm such as Deflate is tacitly utilized. Such a compression algorithm is used for binary compression that removes redundancy of bits included in each packet.

Patent Literature 1 mentioned below describes a method such that, when sending SIP messages, communication devices that terminate SIP create a short text message, from which a redundant parameter is deleted, and send it. When receiving SIP messages, a text syntax (parameter) that is deleted by a sender is specified to reproduce a SIP message, thereby improving the compression efficiency.

### Citation List

### Patent Literature

Patent Literature 1: Japanese Patent No. 4044845 Summary

### Technical Problem

However, the technique described in Patent Literature 1 mentioned above can be applied only to communication devices (such as SIP clients and SIP proxies) that are aware of the meaning of the SIP. That is, an applicable section of communication is limited between communication devices that terminate the SIP and thus communication devices that are not aware of the meaning of the SIP cannot compress SIP messages.

In communication systems, there is also assumed a case that a SIP message is compressed not in a SIP proxy that is aware of the meaning of the SIP, but in a node that is not aware of the meaning of the SIP. For example, a PDCP (Packet Data Convergence Protocol) function prescribed by the 3GPP (3rd Generation Partnership Project) is a function for compressing IP headers, and this function is incorporated into base station control devices that do not terminate the SIP. Accordingly, it is probable that SIP messages are compressed in this node (the base station control device). This is because when the base station control device can compress SIP messages, the compression is performed more efficiently. However, the technique described in Patent Literature 1 mentioned above cannot be applied to such a case and thus the compression efficiency cannot be improved.

The present invention has been achieved in view of the above problems, and an object of the present invention is to provide a communication system that performs SIP compression with high efficiency in a node that is not aware of the meaning of a corresponding SIP and to provide a communication device that forms the communication system.

### Solution to Problem

To solve the problem above and achieve the object, a communication system according to the present invention includes: a SIP client; a proxy of the SIP client; and a node that is placed between the SIP client and the proxy and relays a received SIP message, wherein when relaying a SIP message sent for the SIP client, the node replaces management information set up in a particular parameter of the received SIP message with an ID that uniquely denotes a content of the management information and stores the ID and the management information by associating them with each other, and when relaying a SIP message that is sent from the SIP client and when a same ID as the stored ID is set up in the particular parameter of the SIP message, the node replaces the ID with management information associated with the ID, and when the ID is set up in a particular parameter of the received SIP message, the SIP client stores the parameter and the ID by associating them with each other, and when a SIP message that includes a same parameter as the stored parameter is sent, the SIP client sets up an ID associated with the parameter in the parameter. Advantageous Effects of Invention

According to the present invention, it suffices that a node that replaces a setup value of each parameter with an ID recognizes only a parameter that is required to be replaced by an ID among parameters included in a SIP message. Accordingly, even when the node is not aware of the meaning of a SIP protocol (a value set up in a parameter within a SIP message), it is possible to compress SIP messages.

### Brief Description of Drawings

FIG. 1 is a configuration example of a wireless communication system according to the present invention.
FIG. 2 is a sequence diagram of an example of usual (a SIP message is not compressed) SIP signaling.
FIG. 3 is a sequence diagram of an example of SIP signaling in a wireless communication system according to a first embodiment.
FIG. 4 depicts a management method of parameters to be compressed at a node that performs compression of SIP messages.
FIG. 5 is a sequence diagram of an example of SIP signaling in a wireless communication system according to a second embodiment.
FIG. 6 is a sequence diagram of an example of SIP signaling in a wireless communication system according to a third embodiment.
FIG. 7 is a sequence diagram of an example of SIP signaling in a wireless communication system according to a fourth embodiment.
FIG. 8 depicts a management method of parameters to be compressed.

### Description of Embodiments

Exemplary embodiments of a communication system and a communication device according to the present invention will be explained below in detail with reference to the accompanying drawings. The present invention is not limited to the embodiments.

### First embodiment

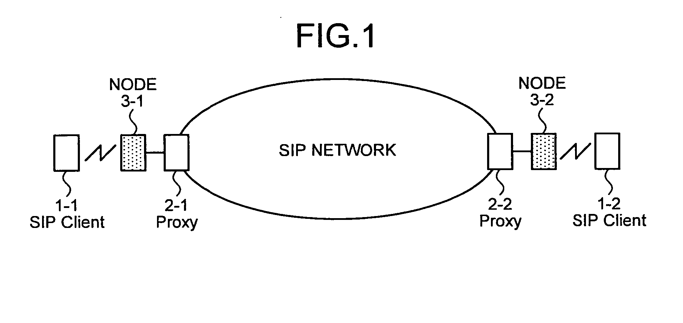

FIG. 1 is a configuration example of a wireless communication system according to the present invention. The wireless communication system of a first embodiment includes SIP clients 1-1 and 1-2 that have a sound communication function and serve as SIP terminations, proxies 2-1 and 2-2 into which the SIP is incorporated and that serve as nodes that correspond the SIP clients 1-1 and 1-2, respectively, and nodes 3-1 and 3-2 that compress and decompress a received SIP message (reproduce a SIP message prior to compression) but do not terminate the SIP. The proxies 2-1 and 2-2 are connected to a SIP network. The node 3-1 is placed between the SIP client 1-1 and the proxy 2-1 and relays various messages (signals) including a SIP message. The node 3-2 is placed between the SIP client 1-2 and the proxy 2-2 and relays various messages (signals) including a SIP message. Each SIP client communicates with each node in a wireless manner. Each node can accommodate a plurality of SIP clients.

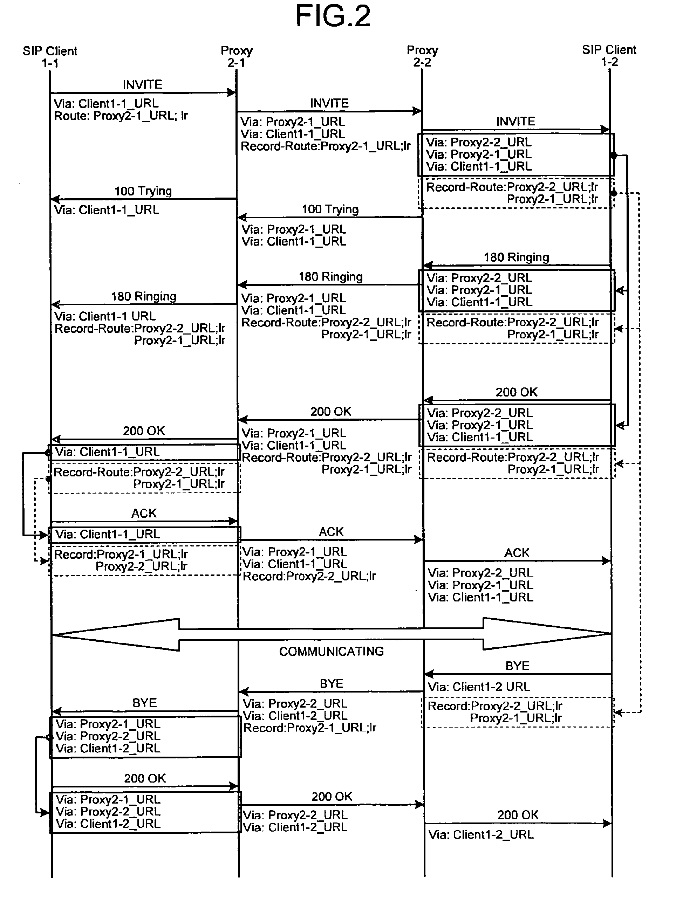

Before a characteristic operation in the wireless communication system according to the present embodiment is explained first, a SIP signaling control operation serving as the basis of the characteristic operations is explained with reference to FIGS. 1 and 2. FIG. 2 is a sequence diagram of usual (a SIP message is not compressed) SIP signaling (a call setup by the SIP), and depicts, as an example, a sequence when a usual SIP signaling is performed in the wireless communication system shown in FIG. 1. Because the nodes 3-1 and 3-2 shown in FIG. 1 merely relay a SIP message in the SIP signaling in which the SIP message is not compressed, operations of the nodes 3-1 and 3-2 are omitted in FIG. 2.

As shown in FIG. 2, according to the call setup by the SIP, a client who wishes to start communication (the SIP client 1-1 in this example) issues (sends) an INVITE message to a client to be communicated (the SIP client 1-2). This INVITE message reaches the client to be communicated via the proxies 2-1 and 2-2. Information regarding each proxy is added to the message when relayed by the proxies. For example, in the proxy 2-1, URL information of the proxy 2-1 (that corresponds to "Proxy2-1_URL" in FIG. 2) is added to a Via parameter (that corresponds to "Via:oooo" in FIG. 2) and a Record-Route parameter (that corresponds to "Record-Route:oooo;Ir" in FIG. 2) included in a header of the INVITE message. After each proxy transfers (relays) the INVITE message, each proxy sends a 100 Trying message to the SIP client that is a sender of the INVITE message or the proxy.

When receiving the aforementioned INVITE message, the SIP client 1-2 sends, as a response message, a 180 Ringing message (hereinafter, simply "Ringing message"). At this time, values of the Via parameter and the Record-Route parameter included in the received INVITE message are set up without any changes. This Ringing message is transferred (relayed) while a part of the information set up in the Via parameter is deleted in each proxy. For example, "Via:Proxy2-2_URL" is deleted in the proxy 2-2. That is, when transferring the Ringing message, each proxy deletes its URL information from the information set up in the Via parameter of the Ringing message.

Similarly, when transferring a 200 OK message (hereinafter, simply "OK message") sent from the SIP client 1-2 to the SIP client 1-1 subsequent to the Ringing message, each proxy deletes its URL information from the information set up in the Via parameter of the received OK message.

When the SIP client 1-1 receives the aforementioned OK message and sends an ACK message as a response message, an order of URL information of each proxy (a URL information list) set up in the Record-Route parameter of the received OK message is reordered so as to be reversed and the resultant one is set up in the Record parameter (that corresponds to "Record:oooo;Ir" in FIG. 2) that is one of parameters included in the ACK message. When transferring the ACK message, each proxy deletes its URL information from the information set up in the Record parameter of the received ACK message.

Furthermore, when communication is disconnected between the SIP clients, a SIP client that issues a BYE message (the SIP client 1-2 in the example of FIG. 2) sets up the URL information of each proxy set up in the Record-Route parameter of the INVITE message, which is received when the communication starts, in the Record parameter of the BYE message without any changes (without reordering each piece of the URL information). When transferring the BYE message, each proxy adds its URL information to the information set up in the Via parameter of the received BYE message and deletes its URL information from the information set up in the Record parameter.

When the OK message is sent back in response to the BYE message, the information set up in the Via parameter and the Record-Route parameter of the received message is set up in the Via parameter and the Record-Route parameter of the OK message without any changes as in the case of sending back the OK message in response to the INVITE message. Because the BYE message does not include the Record-Route parameter, only the Via parameter is actually set up. When transferring the OK message, each proxy deletes URL information thereof from the information set up in the Via parameter as in the case of transferring the OK message in response to the INVITE message.

While the example of FIG. 2 depicts the sequence in which the SIP client 1-2 serving as a receiver of the INVITE message issues the BYE message, the above explanations are applied in the case where the SIP client 1-1 issues the BYE message. That is, when the SIP client 1-1 issues the BYE message, the information set up in the Record-Route parameter of the OK message in response to the INVITE message (the URL information of each proxy) is set up in the Record parameter of the BYE message.

As described above, the Via parameter, the Record-Route parameter, and the Record parameter of each SIP message are correlated with one another. This correlation can be considered to be tacitly known to a SIP client that terminates the SIP protocol.

While two proxies that relay a SIP message between the SIP clients 1-1 and 1-2 (two proxies that understand a content of the SIP message and then transfer it) are provided in the wireless communication system shown in FIG. 1, many more proxies exist in practice. As can be understood from the above explanations, when many proxies exist between the SIP clients, the information set up in the Via parameter is increased and thus the SIP message becomes large. When a wireless section is included in the transmission path of the SIP message, such as when the SIP client is a wireless communication terminal, the SIP message is preferably compressed for effective utilization of wireless resources.

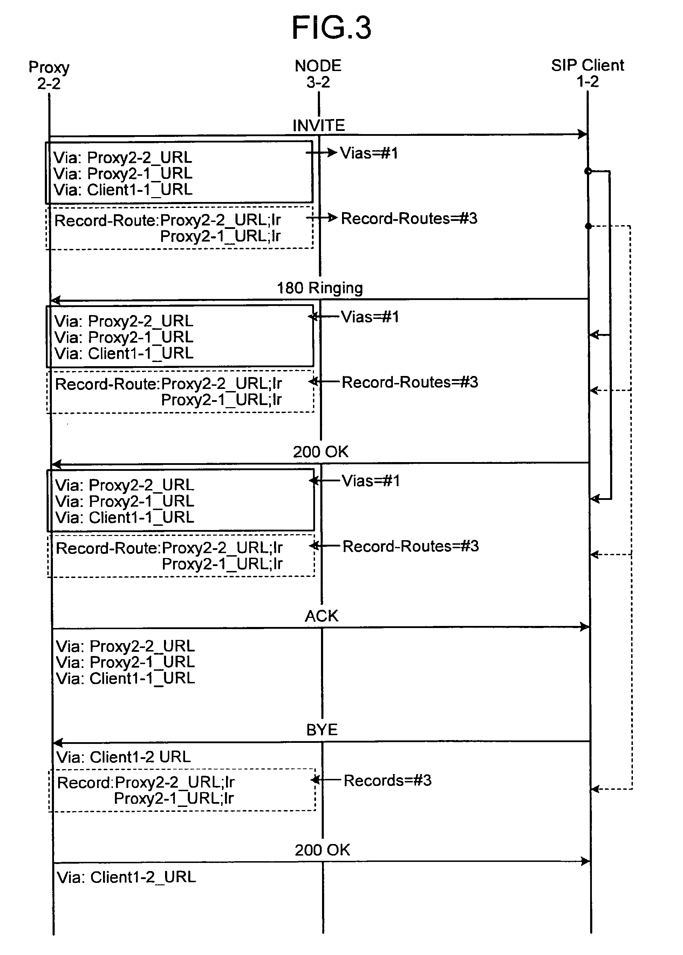

The signaling control operation in the wireless communication system according to the present embodiment is explained next with reference to FIGS. 1 and 3. FIG. 3 is a sequence diagram of an example of SIP signaling in the wireless communication system according to the present embodiment, and depicts a case of starting the SIP signaling at the SIP client 1-1 shown in FIG. 1 like the sequence shown in FIG. 2. Particularly, FIG. 3 focuses on the SIP client 1-2, the proxy 2-2, and the node 3-2 placed in a section in which compression/decompression control of SIP messages is performed in the wireless communication system according to the present embodiment, and depicts a sequence executed between them.

As shown in FIG. 3, after communication starts, the proxy 2-2 sends the INVITE message to the SIP client 1-2 via the node 3-2. A URL list is set up in the Via parameter and the Record-Route parameter within a header of the message. Here, the URL list is management information on a transmission path and URLs of all proxies (a SIP client can be included) on a path for SIP messages are arranged according to their order on the path. As described above, the Via parameter and the Record-Route parameter included in each SIP message are correlated with each other, and this correlation can be considered to be tacitly known to the SIP client that terminates the SIP protocol.

Accordingly, when the node 3-2 sends the SIP message to the SIP client 1-2, it assigns original IDs to these various URL lists. The node 3-2 replaces the information (the URL list) set up in the Via parameter and the information (the URL list) set up in the Record-Route parameter within the header with the IDs, and stores the various URL lists and the replaced IDs by associating them with each other.

Further, when receiving the INVITE message, the SIP client 1-2 associates the ID included in the INVITE message with the parameter in which this ID is set up and stores them. The IDs assigned to the various URL lists are assigned to respective values of the URL lists. That is, the ID denotes a content of the URL list uniquely, not the type of the URL list.

As explained with reference to FIG. 2, when sending the Ringing message, the OK message, and the BYE message, the SIP client 1-2 sets up the Via parameter, the Record-Route parameter, and the Record parameter in their headers. These parameter values are the same as those of the URL lists set up in the header of the received INVITE message. The SIP client 1-2 thus sets up the ID notified by the INVITE message in the header of each message for transmission, and sends it to the proxy 2-2 via the node 3-2.

When receiving the SIP message from the SIP client 1-2, the node 3-2 specifies the URL list corresponding to the ID (the information that uniquely indicates the URL list), which is set up in the header of the message, among stored URL lists. The node 3-2 then replaces the ID set up in the header of the received message with the specified URL list and transfers the resultant message to the proxy 2-2.

According to the example of FIG. 3, when receiving the INVITE message, the node 3-2 replaces the URL lists set up in the Via parameter and the Record-Route parameter within the header of the INVITE message with an ID#1 and an ID#3, respectively. When sending the SIP message (the Ringing message, the OK message, or the BYE message), the SIP client 1-2 sets up the ID#1 and the ID#3 in the Via parameter and the Record-Route parameter within the header of the message, respectively, instead of the URL lists to be originally set up. When receiving the SIP message from the SIP client 1-2, the node 3-2 replaces the IDs set up in the Via parameter and the Record-Route parameter within the header of the message with corresponding URL lists and transfers the resultant message to the proxy 2-2.

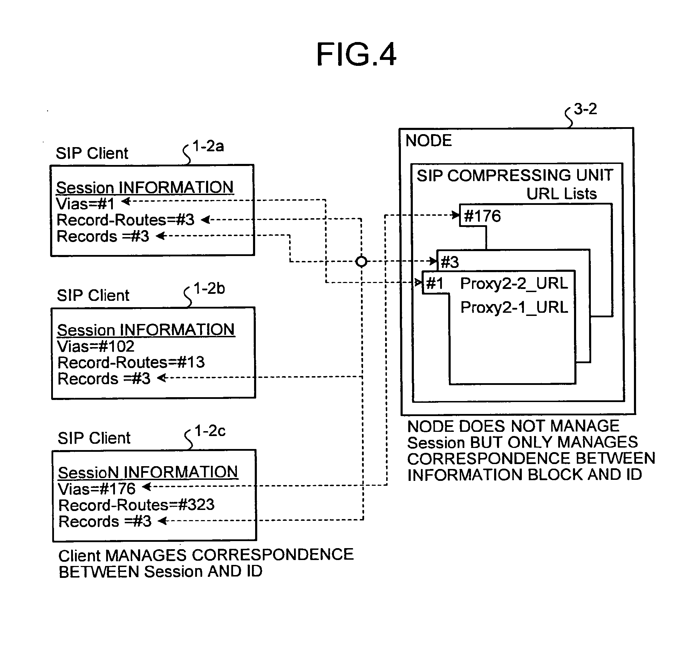

FIG. 4 depicts a management method of parameters to be compressed (the Via parameter, the Record-Route parameter, and the Record parameter) at the node 3-2. As shown in FIG. 4, the node 3-2 associates a URL list, which is set up in a parameter to be compressed in a SIP message, received from the proxy 2-2 with an ID and manages them. According to the example of FIG. 4, while the node 3-2 manages a plurality of SIP clients including a SIP client 1-2a, a SIP client 1-2b, and a SIP client 1-2c, the ID does not need to be managed for each SIP client. That is, the node does not need to recognize which client sends the URL list corresponding to the ID and to which client the URL list should be sent. Further, the type of the parameter such as the Via parameter, the Record-Route parameter, or the Record parameter does not need to be recognized and the ID does not need to be managed for each information type. On the other hand, each SIP client associates session information with the ID and manages them. A management method of a parameter to be compressed and its ID in the node 3-1 and a SIP client connected to this node is the same as this method.

As described above, in the wireless communication system according to the present embodiment, a node that relays a SIP message between a SIP client and a proxy replaces, at a time of relaying the SIP message to the SIP client, the content of each parameter (setup information) with an ID that uniquely denotes the information, with respect to a parameter correlated with other messages (the Via parameter, the Record-Route parameter, or the Route information) among parameters set up in the header of the message to be relayed. Further, when the ID that denotes the content of each parameter is set up in the header of the SIP message received from the SIP client, the node replaces this ID with the corresponding content and relays the resultant message. When the SIP client sends the SIP message, for the parameter that is correlated with other messages among the parameters set up in the header of the message, the SIP client sets up the ID that uniquely denotes the content thereof instead of actual information. Accordingly, the compression efficiency of the SIP message can be improved. Further, a node, which replaces a setup value (setup information) of each parameter with an ID, needs to recognize only a parameter that needs to be replaced by the ID among parameters within the header of a SIP message, and does not need to be aware of the meaning of a SIP protocol (a set value in a parameter within a SIP message).

### Second embodiment

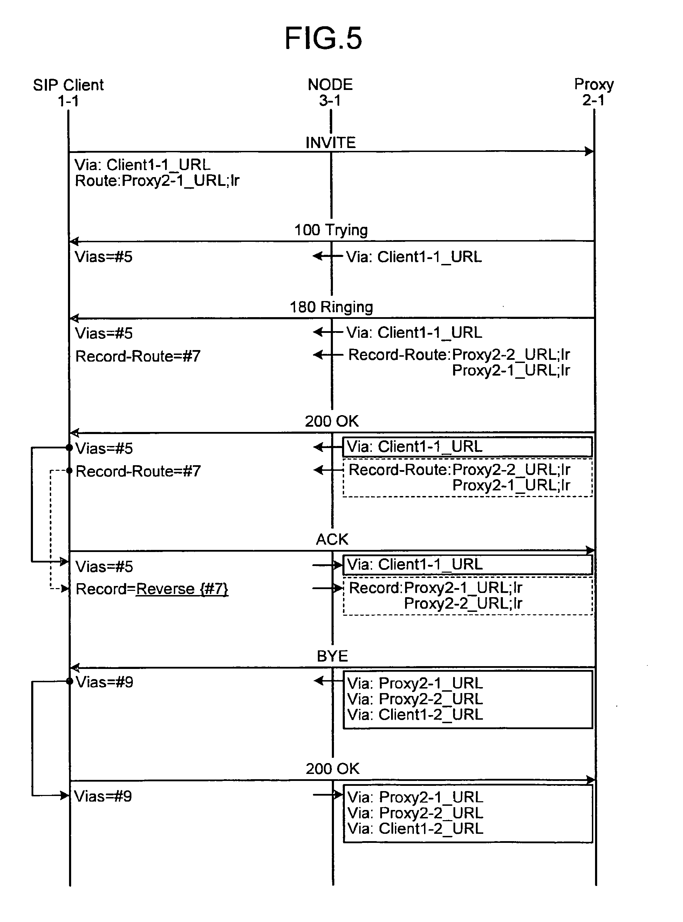

A second embodiment is explained next. The configuration of a wireless communication system according to the second embodiment is identical to that of the first embodiment described above. FIG. 5 is a sequence diagram of an example of SIP signaling in the wireless communication system according to the second embodiment, and depicts a case of starting SIP signaling at the SIP client 1-1 shown in FIG. 1 like the sequence shown in FIG. 2. FIG. 5 particularly focuses on the SIP client 1-1, the proxy 2-1, and the node 3-1 placed in a section in which compression/decompression control of SIP messages is performed in the wireless communication system according to the present embodiment, and depicts a sequence executed between them. A signaling control operation in the wireless communication system according to the present embodiment is explained with reference to FIGS. 1 and 5. Explanations of elements overlapped by the first embodiment will be omitted.

When communication starts and then a sequence proceeds normally, the proxy 2-1 sends a 100 Trying message (hereinafter, simply "Trying message"), a Ringing message, and an OK message to the SIP client 1-1 via the node 3-1. At this time, URL lists are set up in headers of these SIP messages as the Via parameter and the Record-Route parameter. As explained in the first embodiment, the correlation between the Via parameter and the Record-Route parameter included in each SIP message can be considered to be tacitly known to the SIP client that terminates the SIP protocol. Accordingly, when the node 3-1 sends the SIP message to the SIP client 1-1, the node 3-1 assigns IDs to various URL lists, replaces the URL lists set up in the Via parameter and the Record-Route parameter with the IDs, and associates these various URL lists with the IDs for storing them. When the SIP client 1-1 receives the SIP message, the SIP client 1-1 stores the IDs set up in the Via parameter and the Record-Route parameter within the header of the message. The IDs assigned to the various URL lists are assigned to respective values (URLs) of the URL lists as in the first embodiment.

When the SIP client 1-1 receives the OK message and sends the ACK message in response to the OK message, the SIP client 1-1 sets up the Via parameter and the Record parameter within the header of the message. The setup value of the Via parameter is the same as the value (the URL list) set up in the Via parameter of the previously received OK message. A set value in the Record parameter is obtained by reordering the URL list set up in the Record-Route parameter of the received OK message so that its order is reversed. The SIP client 1-1 thus sets up the ID, which is set up in the Via parameter within the header of the received OK message, in the Via parameter within the header of the ACK message. The SIP client 1-1 sets up the ID, which is set up in the Record-Route parameter within the header of the received OK message, and a code (or a character string: "Reverse" in FIG. 5 as an example) that instructs to reverse the URL list denoted by the ID (to reorder so that its order is reversed) in the Record parameter within the header of the ACK message. Then, the SIP client 1-1 sends the resultant message to the proxy 2-1 via the node 3-1.

When the node 3-1 receives a message from the SIP client 1-1, the node 3-1 specifies the URL list corresponding to each ID, which is set up within the header of the message, among stored URL lists. Next, regarding the Via parameter of the received message, the node 3-1 replaces the ID set up in this parameter with the corresponding URL list in the specified URL lists. For the Record parameter, the node 3-1 then replaces the ID set up in this parameter with a list obtained by reversing the corresponding URL list in the specified URL lists (a list reordered so that its order is reversed). Then, the node 3-1 transfers the resultant message to the proxy 2-1.

When receiving the BYE message at the end of the communication, the SIP client 1-1 sets up the ID, which is set up in the Via parameter of the received BYE message, in the Via parameter of the OK message and sends the resultant message. The node 3-1 replaces the ID set up in the Via parameter of the received OK message with the corresponding setup value (the corresponding URL list), and then transfers the resultant message to the proxy 2-1.

As described above, according to the wireless communication system of the present embodiment, when the sequence in which the SIP client receives a first SIP message that includes a certain URL list and sends a second SIP message that includes a URL list obtained by reversing the received URL list (a URL list subjected to reordering so that its order is reversed) as a response message is executed, the node that sends the first SIP message sends the first SIP message, in which the URL list is replaced by an ID, to the SIP client. The SIP client that receives the first SIP message sets up the ID included in the received message in the second SIP message and sets up the instruction information to reverse the URL list corresponding to the ID. The node that receives the second SIP message transforms the URL list corresponding to the ID included in the second SIP message according to the instruction, sets up the resultant transformed URL list instead of the ID, and transfers the resultant one to the corresponding proxy. Thus, even when the URL list set up in a certain SIP message is not the same as the URL list set up in its response message and is a URL list in the reversed order, a redundant parameter (the URL list) can be compressed for improving the SIP compression efficiency.

The control operation described in the present embodiment can be performed in parallel (can be combined) with the control operation of the first embodiment.

### Third embodiment

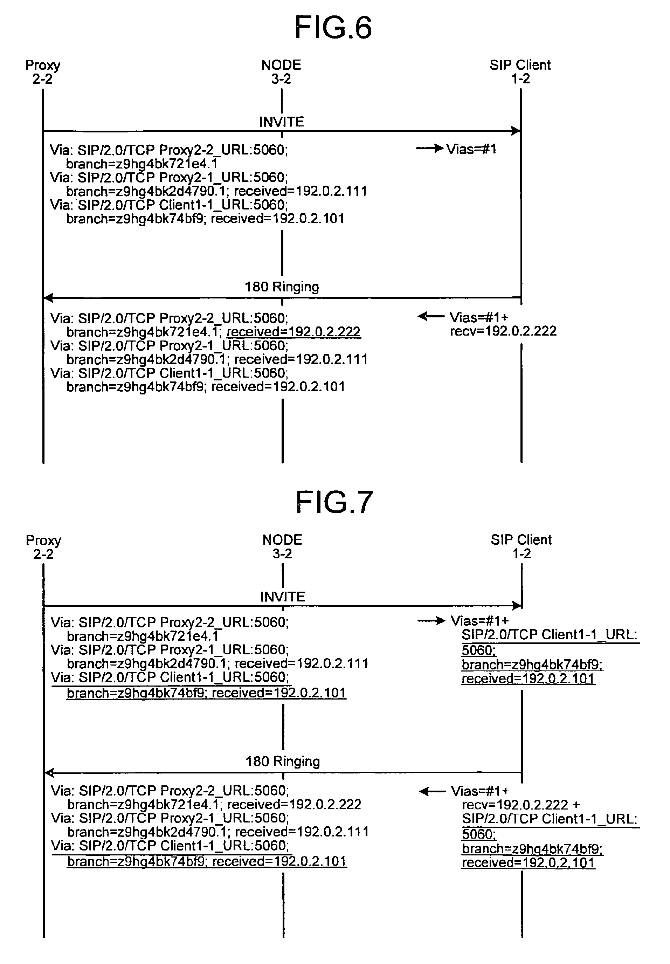

A third embodiment is explained next. The configuration of a wireless communication system according to the third embodiment is identical to that of the first embodiment described above. FIG. 6 is a sequence diagram of an example of SIP signaling in the wireless communication system according to the third embodiment, and depicts a case of starting SIP signaling at the SIP client 1-1 shown in FIG. 1 like the sequence shown in FIG. 2. FIG. 6 particularly focuses on the SIP client 1-2, the proxy 2-2, and the node 3-2 placed in the section in which compression/decompression control of SIP messages is performed in the wireless communication system according to the present embodiment, and depicts a sequence executed between them. A signaling control operation in the wireless communication system according to the present embodiment is explained with reference to FIGS. 1 and 6. Explanations of elements overlapped by the first or second embodiment will be omitted.

The present embodiment explains a control operation in the case where the SIP client 1-2 adds, at a time of sending the Ringing message, a character string "received=192.0.2.222" to the top URL on a list based on the Via parameter (the URL list) received by the INVITE message, as the Via parameter.

When the information obtained by adding the character string "received=192.0.2.222" to the top URL in the URL list set up in the Via parameter of the received INVITE message is set up in the Via parameter of the Ringing message and the resultant message is sent, the SIP client 1-2 sets up the ID notified by the INVITE message (the ID set up in the Via parameter of the INVITE message), a code (or a character string: "+" in FIG. 6 as an example) to instruct to add a character string to the first URL in the URL list corresponding to the ID, and an additional character string ("recv=192.0.2.222" in FIG. 6) in the Via parameter of the Ringing message, and sends the resultant message to the proxy 2-2. When receiving the Ringing message, the node 3-2 specifies the URL list corresponding to the ID set up in the Via parameter of the message among stored URL lists. The node 3-2 then replaces the ID set up in the Via parameter of the received Ringing message with the specified URL list. The node 3-2 adds the character string to the top of the replaced URL list according to the instruction information and the additional character string included in the received message. Then, the node 3-2 transfers the resultant message to the proxy 2-2.

By performing such a procedure, even when the sequence of setting up a URL list included in a received SIP message and sending a SIP message in which a predetermined character string is added to the URL list is executed, a redundant parameter can be deleted and the SIP compression efficiency can be improved.

As described above, according to the wireless communication system of the present embodiment, in the case where the sequence in which the SIP client receives a first SIP message that includes a certain URL list and sends a second SIP message that includes a URL list obtained by adding a character string to the first URL in the received URL list is executed, the node that sends the first SIP message sends the first SIP message in which the URL list is replaced by an ID to the SIP client. The SIP client that receives the first SIP message sets up the ID included in the received message in the second SIP message, and sets up the instruction information to add a character string to the first URL in the URL list corresponding to the ID and the character string to be added. The node that receives the second SIP message transforms the URL list corresponding to the ID included in the received message according to the instruction, sets up the transformed URL list instead of the ID, and transfers the resultant message to the corresponding proxy. Thus, even when the sequence of setting up the URL list included in the SIP message received by the SIP client and sending the SIP message obtained by adding a predetermined character string to the URL list to the proxy is executed, a redundant parameter (a URL list) can be compressed and thus the SIP compression efficiency can be improved.

The control operation described in the present embodiment can be performed concurrently (can be combined) with the control operation of the first or second embodiment.

### Fourth embodiment

A fourth embodiment is explained next. The configuration of a wireless communication system according to the present embodiment is identical to that of the first embodiment described above. FIG. 7 is a sequence diagram of an example of SIP signaling in the wireless communication system according to the fourth embodiment, and depicts a case of starting SIP signaling at the SIP client 1-1 shown in FIG. 1 like the sequence shown in FIG. 2. FIG. 7 particularly focuses on the SIP client 1-2, the proxy 2-2, and the node 3-2 placed at the section, in which compression/decompression control of SIP messages is performed in the wireless communication system according to the present embodiment, and depicts a sequence executed between them. Explanations of elements overlapped by the first, second, or third embodiment will be omitted.

As explained in the first embodiment with reference to FIG. 2, a URL list set up in the Via parameter of the INVITE message sent between SIP clients includes a URL of a SIP client serving as a sender (the SIP client 1-1 in FIG. 2), and this URL is set up at the end of the list.

Accordingly, in the signaling control operation of the present embodiment, the node 3-2 and the SIP client 1-2 perform the following operation to reduce a memory capacity required for the node 3-2.

As shown in FIG. 7, according to the SIP signaling of the present embodiment, when transferring the INVITE message received from the proxy 2-2 to the SIP client 1-2, the node 3-2 replaces information except the URL of the SIP client serving as a sender (hereinafter, "sender URL") with an ID, the information (the URL list) being set up in the Via parameter of the message (in FIG. 7, the list is replaced with, for example, "#1+SIP/2.0/TCP Client1-1 URL:5060;branch=z9hg4bk74bf9; received=192.0.2.101"). According to parameters other than the Via parameter (the Record-Route parameter), all pieces of setup information (URL lists) are replaced by IDs as in the first embodiment. The URL list replaced by the ID is stored by associated with the ID. The Record-Route parameter is omitted in FIG. 7.

When receiving the INVITE message, the SIP client 1-2 stores the ID and a URL character string (the sender URL) included in the message. When sending the Ringing message, the SIP client 1-2 sets up the ID and the URL character string stored when the SIP client 1-2 receives the INVITE message in the Via parameter of the Ringing message. Although this is omitted in FIG. 7, the ID stored when the SIP client 1-2 receives the INVITE message (the ID set up in the Record-Route parameter of the INVITE message) is set up in the Record-Route parameter of the Ringing message. The operation of the SIP client 1-2 is basically the same as that explained in the first embodiment. That is, in any operation, the information set up in the Via parameter and the Record-Route parameter of the received INVITE message is stored. When the Ringing message is sent, the information stored when the INVITE message is received is set up in the Via parameter and the Record-Route parameter.

When receiving the Ringing message from the SIP client 1-2, the node 3-2 specifies the URL lists corresponding to the IDs set up in the Via parameter and the Record-Route parameter within the header of the message among stored URL lists. The node 3-2 then replaces the ID set up in the header of the received message with the specified URL list. The node 3-2 sets up the sender URL, which is set up in the Via parameter of the received Ringing message, for the Via parameter and transfers the resultant message to the proxy 2-2.

As described above, according to the wireless communication system of the present embodiment, when the node that compresses SIP messages and then transfers the compressed SIP messages receives a SIP message, the node replaces a URL list except a sender URL with an ID for the Via parameter included in the message. For other pieces of information (the Record-Route parameter), the node replaces all URL lists with IDs and transfers the resultant message. A part that represents a SIP client (a URL of the SIP client) is removed from a character string in the URL list managed by the node. The node that compresses the SIP message thus manages only the URL of a proxy to be relayed. In the node, the character string of the managed URL list is probably common to a plurality of accommodated SIP clients. As a result, the quantity of URL list information managed by the node is reduced and the memory capacity required for the node can be reduced.

### While "SIP/2.0/TCP Client1-1

URL:5060;branch=z9hg4bk74bf9;received=192.0.2.101" (see FIG. 7) is shown as an example of the URL character string described in the Via parameter with the ID in the present embodiment, not only the character string that indicates the actual URL but also options such as a character string that represents a protocol such as SIP/2.0/TCP and branch can be described in the URL character string. That is, a URL character string that is a target at a time when the Via parameter is compressed (replaced by an ID) means a common character string including a URL.

By performing such a procedure, even when various options are attached to a URL portion of a URL list, a redundant parameter can be removed and thus the SIP compression efficiency can be improved.

While the control operation described in the present embodiment is a modification of the control operation of the first embodiment, it can be performed concurrently (can be combined) with those of the second and third embodiments.

### Fifth embodiment

A fifth embodiment is explained next. While each node, which compresses a SIP message in the wireless communication system of the embodiments described above, manages the URL list that is information to be compressed (the Via parameter, the Record-Route parameter, and the Record parameter) by the procedure of FIG. 4, the present embodiment explains a management method different from that of FIG. 4.

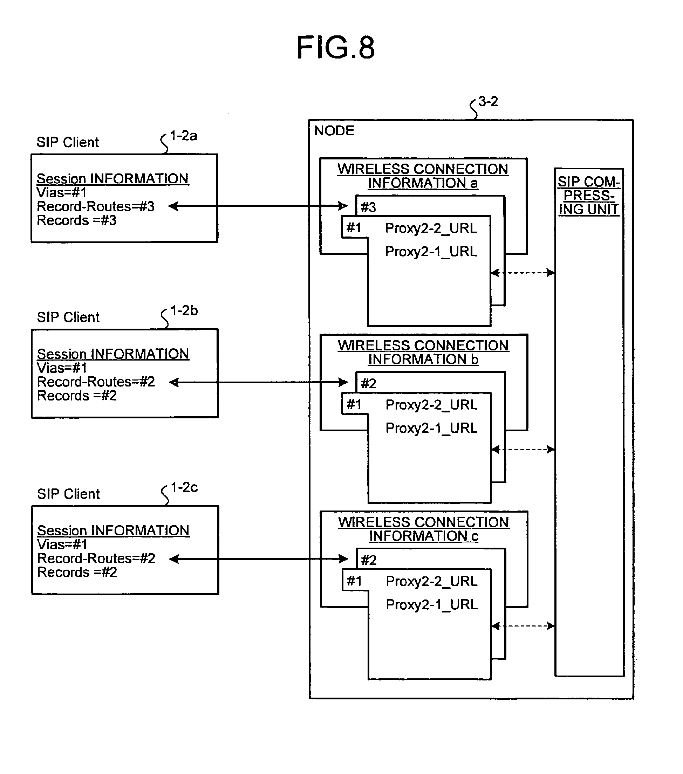

According to the procedure shown in FIG. 4, in each node, the SIP compressing unit thereof that compresses a SIP message unifies management of URL lists and IDs. In base station control devices, there is actually a part that does not recognize a SIP protocol but manages connection which corresponds to a SIP client on a one-to-one basis. Examples of such a part include a part that manages wireless resources for each user. In this part, wireless connection information is managed by associated with a SIP client. In such a case, the URL list can be managed by being associated with the wireless connection information and it suffices that the ID is uniquely assigned to one SIP client. For example, as shown in FIG. 8, the node 3-2 manages the ID of the URL list by associating it with already held management information of wireless connection, which is between each SIP client and the own node 3-2 (SIP clients 1-2a, 1-2b, or 1-2c) (wireless connection information a, wireless connection information b, or wireless connection information c shown in FIG. 8), and thus a plurality of IDs of a same value can be used. When the management method of parameters to be compressed as shown in FIG. 8 is applied, an increase in ID value can be prevented as compared to the case of applying the procedure shown in FIG. 4.

A correspondence table between the URL list and the ID may become significantly large. In such a case, according to the procedure of managing the URL list and the ID without paying attention to connection (session) as shown in FIG. 4, there is a problem that it takes time to search and specify the information (the URL list) that corresponds to an ID in a SIP message received from the SIP client. However, when the management method shown in FIG. 8 is used, a target URL list can be specified in a short time as long as wireless connection can be specified. Therefore, the above problem can be prevented.

While the respective embodiments have been explained by taking the Via, the Record-Route, and the Record parameters for a SIP as examples, parameters used in the same manner as that of these parameters can be compressed by the same procedure. Further, a wireless communication system has been exemplified in each of the embodiments, a wired communication system can be also used, and even in this case, effects identical to those of a wireless communication system can be achieved.

As described above, according to the communication system of the respective embodiments, even when a node that is not aware of the meaning of SIP protocol compresses a SIP message, a redundant SIP parameter can be removed and reproduced and thus greater SIP message compression efficiency can be achieved. For example, assuming that, in a network in which 20 proxies (SIP proxies) are passed through, a URL that represents a proxy composed of 20 characters, respective URL lists of Via and Record-Route are 400 bytes. Accordingly, 800 bytes are required merely for two parameters. Because other parts of the SIP message are small, the URL list is dominant in view of the size of SIP messages. Because this URL list is replaced by identification information with a smaller size (the ID described above) in the present invention, higher compression efficiency can be realized.

### Industrial Applicability

As described above, the communication system of the present invention is suitable when SIP signaling is realized with a reduced information transmission amount, and the communication system is particularly suitable when a node, which does not terminate a SIP protocol, such as a base station control device or a base station compresses/decompresses SIP messages for realizing higher compression efficiency.

### Reference Signs List

1-1, 1-2, 1-2a, 1-2b, 1-2c SIP CLIENT
2-1, 2-2 PROXY
3-1, 3-2 NODE

## Claims

1. A communication system comprising: a SIP client; a proxy of the SIP client; and a node that is placed between the SIP client and the proxy and relays a received SIP message, wherein
when relaying a SIP message sent for the SIP client, the node replaces management information set up in a particular parameter of the received SIP message with an ID that uniquely denotes a content of the management information, and stores the ID and the management information by associating them with each other, and
when relaying a SIP message that is sent from the SIP client and when a same ID as the stored ID is set up in the particular parameter of the SIP message, the node replaces the ID with management information associated with the ID, and
when the ID is set up in a particular parameter of the received SIP message, the SIP client stores the parameter and the ID by associating them with each other, and
when a SIP message that includes a same parameter as the stored parameter is sent, the SIP client sets up an ID associated with the parameter in the parameter.

2. The communication system according to claim 1, wherein
the management information is a list of a URL of each proxy on a path, through which a SIP message sent for the SIP client passes, and of a URL of a sender of the SIP message.

3. The communication system according to claim 1, wherein
the management information is a list of a URL of each proxy on a path, through which a SIP message sent for the SIP client passes.

4. The communication system according to claim 1, wherein
the management information is a list of a plurality of character strings containing URLs of respective proxies on a path, through which a SIP message sent for the SIP client passes, and of a character string containing a URL of a sender of the SIP message.

5. The communication system according to claim 1, wherein
the management information is a list of a plurality of character strings containing URLs of respective proxies on a path, through which a SIP message sent for the SIP client passes.

6. The communication system any one of claims 2 to 5, wherein
when sending a SIP message that includes a parameter, to which a URL list that corresponds to a parameter stored by associated with the ID or a list obtained by reversing an order of respective information of character string lists is to be set up, the SIP client further sets up an ID associated with the stored parameter, and also sets up instruction information, which instructs to replace the ID with a corresponding list and then reverse an order of respective information on the list, for the parameter, and
when receiving from the SIP client a SIP message in which a same ID as the ID stored and the instruction information are set up in a particular parameter, the node replaces an ID set up in the received message with a list obtained by reversing an order of respective information on a list associated with the ID, and transfers a resultant message.

7. The communication system according to any one of claims 2 to 6, wherein
when sending a SIP message that includes a same parameter as the stored parameter, the SIP client sets up an ID associated with the parameter and, if necessary, sets up character-string-addition instructing information that instructs to add a character string to a predetermined position of a list, which is stored by associated with the ID, in the parameter, and
when receiving from the SIP client a SIP message in which a same ID as the stored ID and the character-string-addition instructing information are set up in a particular parameter, the node replaces the ID with a list associated with the ID, adds a designated character string to a position instructed by the instruction information, and transfers a resultant SIP message.

8. The communication system according to any one of claims 1 to 7, wherein
when storing the management information by associating it with an ID that uniquely denotes a content of the management information, the node stores the information by associating it with connection information of the SIP client.

9. A communication device that is operated as the node according to any one of claims 1 to 8.

10. A communication device that is operated as the SIP client according to any one of claims 1 to 8.
